# EUROPEAN PATENT APPLICATION

(11) **EP 2 698 953 A1**
(43) Date of publication of application: **19.02.2014**
(21) Application number: 12771278.4
(22) Date of filing: 12.04.2012
(51) Int. Cl.: H04L 12/56

(54) **NETWORK, DATA TRANSFER NODE, COMMUNICATION METHOD, AND PROGRAM**

(30) Priority: 13.04.2011 JP 2011089274
(71) Applicant: NEC Corporation, Minato-ku Tokyo 108-8001 (JP)
(72) Inventor: KUSUMOTO, Nobuhiro, Tokyo 108-8001 (JP)
(74) Representative: Vossius & Partner
(86) International application number: PCT/JP2012/059999
(87) International publication number: WO 2012/141241

(57) **Abstract**

Provided is a network capable of achieving both fine path control based on a packet feature and easiness in setting and operation. The network includes a data forwarding node including: a logical network topology management unit managing a correspondence relationship among at least two different logical network topologies generated by applying different policies to a physical network topology and data traffic conditions to which the logical network topologies are applied; and a packet processing unit selecting a logical network topology corresponding to data traffic to which an incoming packet belongs, determining a packet forwarding destination, and transmitting the incoming packet. The data forwarding node selects a logical network and forwards a packet, based on data traffic.

## Description

### TECHNICAL FIELD

### [REFERENCE TO RELATED APPLICATION]

The present invention is based upon and claims the benefit of the priority of Japanese patent application No. 2011-089274, filed on April 13, 2011, the disclosure of which is incorporated herein in its entirety by reference thereto.

The present invention relates to a network, a data forwarding node, a communication method, and a program. In particular, it relates to a network, a data forwarding node, a communication method, and a program that include a path control function.

### BACKGROUND

In a data forwarding network including a plurality of data forwarding nodes, a topology has a plurality of forwarding paths from a certain data forwarding node to another data forwarding node, and a data traffic forwarding path is determined in accordance with a predetermined policy. In this way, improvement in load balancing and availability is realized. Mainly, the following three methods are used to determine a forwarding path. Method 1) Link state method:
Weight is given to each link connecting data forwarding nodes, and a path realizing a minimum total link weight between data forwarding nodes is selected. By changing link weight, a data traffic forwarding path is controlled.

### Method 2) Policy routing method:

A forwarding path is determined per network entry, data forwarding node, or data traffic type, and data is forwarded along such determined path. By changing a data traffic type and a forwarding path, a data traffic forwarding path is controlled.

### Method 3) Equal-cost multipath method:

The hash values or the like of headers in data traffic are used to sort data into a plurality of paths having an equal cost. Generally, a data traffic forwarding path cannot be controlled.

Meanwhile, the recent advancement in cloud services has been demanding higher quality requirements of data center services. Particularly, for mission critical services, there is a demand for quality improvement by controlling a forwarding path per data traffic.

In addition, PTL 1 discloses a configuration in which each node device performs autonomous-distributed-type path control on a cluster basis. According to PTL 1, node devices on an overlay network performing overlay routing that realizes path search in a wide area and optimization resource utilization are clustered.

In addition, PTL 2 discloses a network design device that designs a tree topology in an overlay network virtually generated by an upper layer of a data network including a plurality of nodes.

### CITATION LIST

### PATENT LITERATURE

[PTL 1]
   Japanese Patent Kokai Publication No. 2010-199972A
[PTL 2]
   Japanese Patent Kokai Publication No. 2010-193224A

### SUMMARY

### TECHNICAL PROBLEM

The following analysis has been given by the present inventor. According to the above method 1, if the same combination of a source and a destination is used, the same path is always calculated. Thus, fine path control per data traffic cannot be performed, counted as a problem. In addition, since a change in link weight affects the entire network, it is difficult to predict a behavior after the change, counted as a problem.

According to method 2, fine control can be performed. However, before settings are performed, the data forwarding nodes at the entries and exits of a network need to be grasped per data traffic. Thus, significant time and effort in operation is required, counted as a problem. In addition, with the recent advancement in server virtualization technology such as live migration technology, physical positions of servers are frequently changed. Thus, since it is difficult to determine the data forwarding nodes at the entries and exits in data traffic, settings cannot be performed, counted as a problem. In addition, even if settings could be performed, data cannot always be forwarded along an optimum path desired by an operator, counted as a problem.

Since method 3 generally depends on the hardware logic of data forwarding nodes, settings are not necessary. However, as is the case with method 1, control cannot be performed per data traffic, counted as a problem.

In addition, according to the method disclosed in PTL 1, autonomous-distributed-type path control is performed by clustering in an overlay network. Cluster configurations are not changed so that quality requirements of certain data traffic and other data traffic are satisfied.

In addition, with the network design device disclosed in PTL 2, a tree topology in an overlay network is redesigned based on a traffic amount. A tree topology is not changed depending on certain data traffic and other data traffic.

It is an object of the present invention to provide a network configuration and method capable of achieving both fine path control based on data traffic and easiness in setting and operation.

### SOLUTION TO PROBLEM

According to a first aspect of the present invention, there is provided a network including a data forwarding node selecting a logical network based on data traffic. Specifically, this network includes a data forwarding node including: a logical network topology management unit managing a correspondence relationship among at least two different logical network topologies generated based on a physical network topology and data traffic to which the logical network topologies are applied; and a packet processing unit selecting a logical network topology corresponding to data traffic to which an incoming packet belongs, determining a packet forwarding destination, and transmitting the incoming packet.

According to a second aspect of the present invention, there is provided a data forwarding node, including: a logical network topology management unit managing a correspondence relationship among at least two different logical network topologies generated based on a physical network topology and data traffic to which the logical network topologies are applied; and a packet processing unit selecting a logical network topology corresponding to data traffic to which an incoming packet belongs, determining a packet forwarding destination, and transmitting the incoming packet.

According to a third aspect of the present invention, there is provided a communication method, including steps of: causing a data forwarding node, which includes a logical network topology management unit that manages a correspondence relationship among at least two different logical network topologies generated based on a physical network topology and data traffic to which the logical network topologies are applied, to select, when the data forwarding node receives a packet, a logical network topology corresponding to data traffic to which the packet belongs, from among the at least two different logical network topologies; and causing the data forwarding node to use the selected logical network topology, determine a packet forwarding destination, and transmit the incoming packet. This method is associated with a certain machine, that is, with the data forwarding node constituting a physical network.

According to a fourth aspect of the present invention, there is provided a program, causing a computer arranged in a physical network to perform processes of: causing a data forwarding node, which includes a logical network topology management unit that manages a correspondence relationship among at least two different logical network topologies generated based on the physical network topology and data traffic to which the logical network topologies are applied, to select, when the data forwarding node receives a packet, a logical network topology corresponding to data traffic to which the packet belongs, from among the at least two different logical network topologies; and causing the data forwarding node to use the selected logical network topology, determine a packet forwarding destination, and transmit the incoming packet. This program can be recorded in a computer-readable storage medium. Namely, the present invention can be embodied as a computer program product.

### [Advantageous Effects of Invention]

According to the present invention, it is possible to achieve both fine path control based on a packet feature and easiness in setting and operation.

### BRIEF DESCRIPTION OF DRAWINGS

Fig. 1 illustrates an outline according to an exemplary embodiment of the present invention.
Fig. 2 illustrates a physical connection relationship among data forwarding nodes in Fig. 1.
Fig. 3 illustrates a network configuration according to a first exemplary embodiment of the present invention.
Fig. 4 is a block diagram illustrating a detailed configuration of a data forwarding node according to the first exemplary embodiment of the present invention.
Fig. 5 illustrates logical network topologies generated by a logical network topology generation unit in the data forwarding node according to the first exemplary embodiment of the present invention.
Fig. 6 illustrates a table stored in a logical network topology management unit in the data forwarding node according to the first exemplary embodiment of the present invention.
Fig. 7 illustrates a table referred to by a packet transmission unit in the data forwarding node according to the first exemplary embodiment of the present invention.
Fig. 8 is a flowchart illustrating an operation of the data forwarding node according to the first exemplary embodiment of the present invention.
Fig. 9 illustrates a specific example of processing in STEP1 in Fig. 8.
Fig. 10 illustrates a specific example of processing in STEP2 in Fig. 8.
Fig. 11 illustrates a specific example of processing in STEP3 in Fig. 8.
Fig. 12 illustrates a specific example of processing in STEP4 in Fig. 8.
Fig. 13 illustrates a specific example of processing in STEP5 in Fig. 8.

### DESCRIPTION OF EMBODIMENTS

First, an outline of an exemplary embodiment of the present invention will be described. In the following outline, various components are denoted by reference characters for the sake of convenience. Namely, the following reference characters are merely used as examples to facilitate understanding of the present invention. Thus, the present invention is not limited to the illustrated modes.

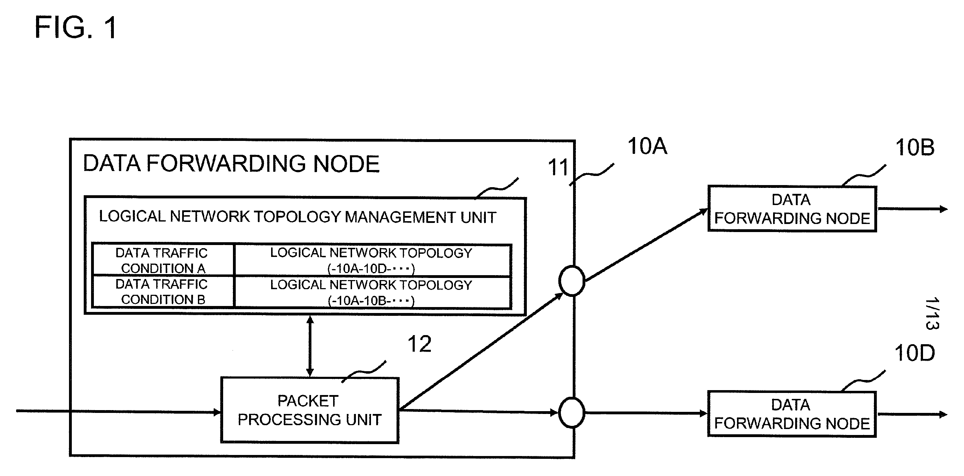

As illustrated in Fig. 1, an exemplary embodiment of the present invention can be realized by a configuration including a data forwarding node including: a logical network topology management unit 11 managing a correspondence relationship among at least two different logical network topologies generated based on a physical network topology and data traffic to which the logical network topologies are applied; and a packet processing unit 12 selecting a logical network topology corresponding to data traffic to which an incoming packet belongs, determining a packet forwarding destination, and transmitting the incoming packet.

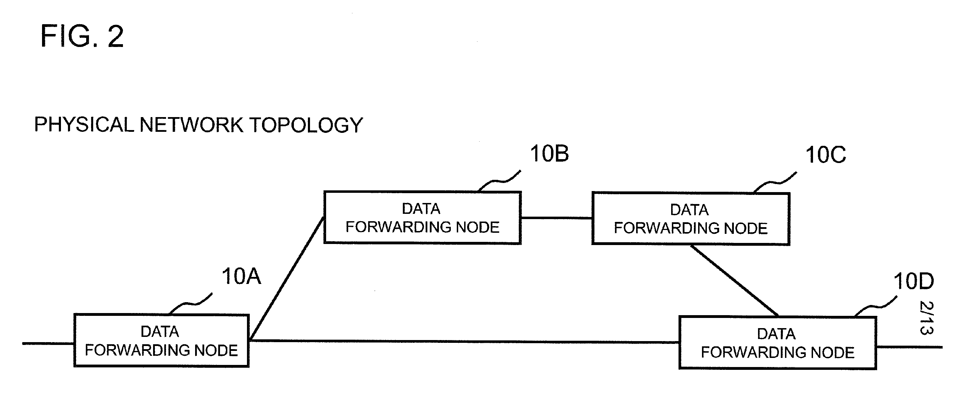

For example, the following description will be made based on a case where there is a physical network topology as illustrated in Fig. 2 and a user wishes to separately use a path in which packets are directly forwarded from a data forwarding node 10A to a data forwarding node 10D and a path in which packets are forwarded from the data forwarding node 10A to a data forwarding node 10D via a data forwarding node 10B and a data forwarding node 10C in this order, depending on data traffic.

In such case, a logical network topology in which the data forwarding node 10A is connected to the data forwarding node 10D and a logical network topology in which the data forwarding node 10A is connected to the data forwarding node 10B are stored as logical networks in the logical network topology management unit 11 in the data forwarding node 10A. In addition, data traffic conditions for determining data traffic corresponding to these logical network topologies are stored in the logical network topology management unit 11.

The packet processing unit 12 selects a logical network corresponding to data traffic to which an incoming packet belongs and forwards the packet. In Fig. 1, while detailed configurations of the data forwarding nodes 10B and 10D are not illustrated, the data forwarding nodes 10B and 10D can be configured in the same way as the data forwarding node 10A.

As described above, according to the present invention, fine path control can be performed by causing each data forwarding node to switch logical networks based on a packet feature. In addition, since it is only necessary to add a desired entry to the logical network topology management unit in the above data forwarding node and to rewrite such entry, a new path can be set and operated more easily, compared with the techniques described in "Background."

### [First exemplary embodiment]

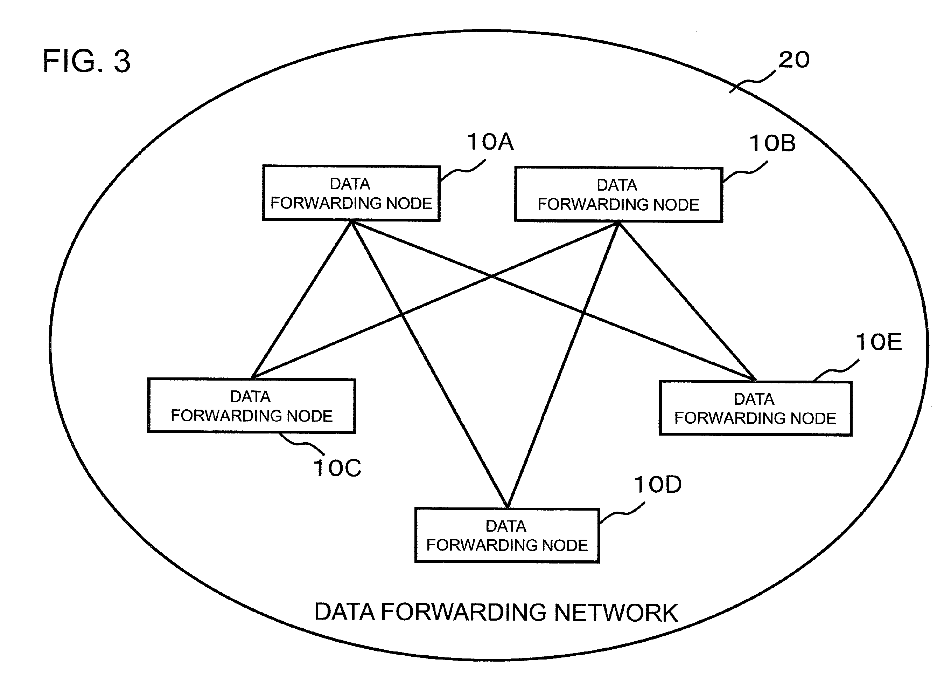

Next, a first exemplary embodiment of the present invention will be described in detail with reference to the drawings. Fig. 3 schematically illustrates a network configuration according to the first exemplary embodiment of the present invention. Fig. 3 illustrates a data forwarding network 20 which includes a data forwarding node 10A that is connected to data forwarding nodes 10C to 10E and a data forwarding node 10B that is also connected to the data forwarding nodes 10C to 10E.

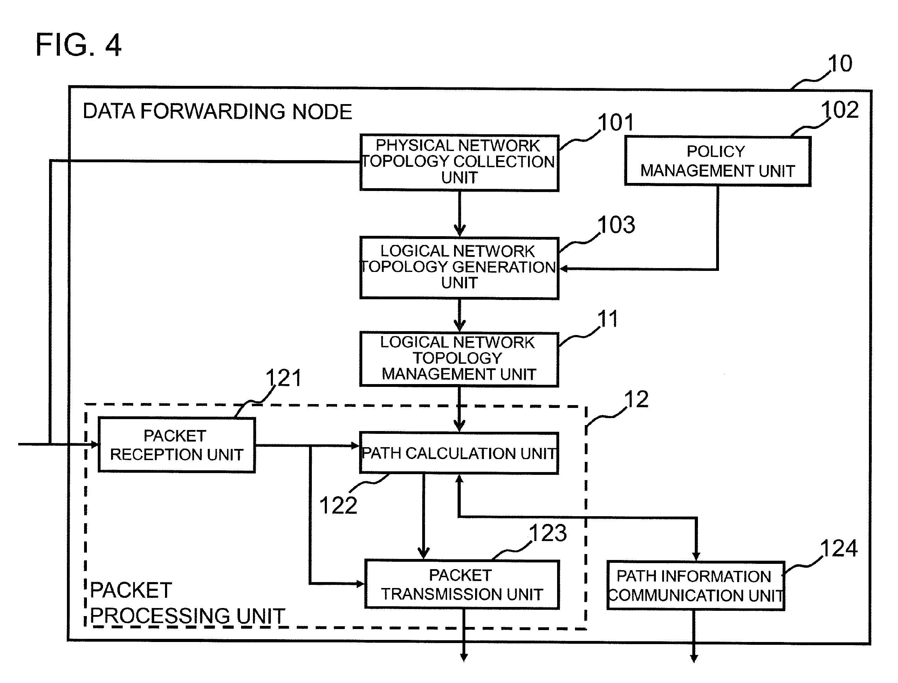

Fig. 4 is a block diagram illustrating a detailed configuration of any one of the data forwarding nodes 10A to 10E. In Fig. 4, the data forwarding node 10 includes a physical network topology collection unit 101, a policy management unit 102, a logical network topology generation unit 103, a logical network topology management unit 11, a packet reception unit 121, a path calculation unit 122, a packet transmission unit 123, and a path information communication unit 124 (hereinafter, unless the data forwarding nodes 10A to 10E need to be particularly distinguished, each of the data forwarding nodes 10A to 10E will be referred to as a data forwarding node 10). The packet reception unit 121, the path calculation unit 122, and the packet transmission unit 123 correspond to the above packet processing unit 12.

The physical network topology collection unit 101 is a means of establishing a physical network topology based on information collected from each data forwarding node by using a function such as LLDP (Link Layer Discovery Protocol) or the like and is a means of providing the physical network topology to the logical network topology generation unit 103. Of course, if a network configuration has already been determined in advance, the physical network topology collection unit 101 may be omitted and the logical network topology generation unit 103 may refer to a known physical network topology.

The policy management unit 102 is a means of managing policy information for generating a logical network topology from a physical network topology. The present exemplary embodiment will be described assuming that the policy information represents weight among the links in the physical network topology. In addition, in each item of policy information, a data traffic condition for determining data traffic to which this corresponding policy information is applied is set. A correspondence relationship between such policy information and data traffic can be set based on a contract with a user, separately-collected traffic statistical information, various types of customer information, or the like.

The logical network topology generation unit 103 is a means of applying policy information managed by the policy management unit 102 to a physical network topology established by the physical network topology collection unit 101 and generating a logical network topology in which a data traffic condition is specified.

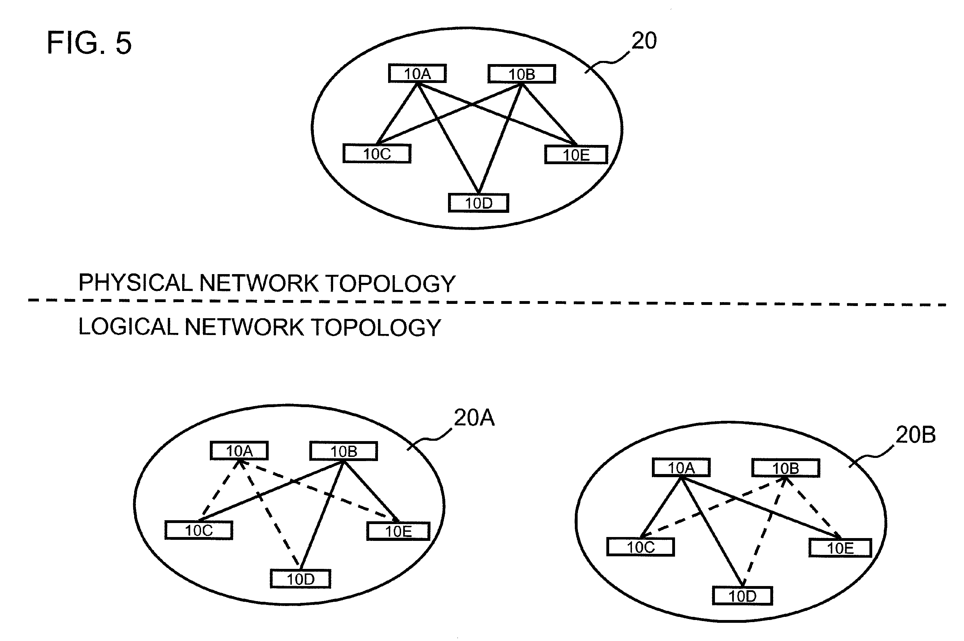

Fig. 5 illustrates logical network topologies generated by the logical network topology generation unit 103. By adding weight to links among certain data forwarding nodes in the data forwarding network 20 (those located in the upper half of Fig. 5) in accordance with the policy information, logical network topologies 20A and 20B as illustrated in the lower half of Fig. 5 can be obtained (the links indicated by solid lines and the links indicated by dashed lines have different weight). If a user wishes to cause a certain physical link to forward data traffic, the user may set smaller weight in the physical link. Alternatively, if a user wishes to prevent a certain physical link from forwarding data traffic, the user may set larger weight in the physical link. In this way, paths can be controlled.

The logical network topology management unit 11 is a means of managing logical network topologies generated by the logical network topology generation unit 103, along with the above data traffic conditions.

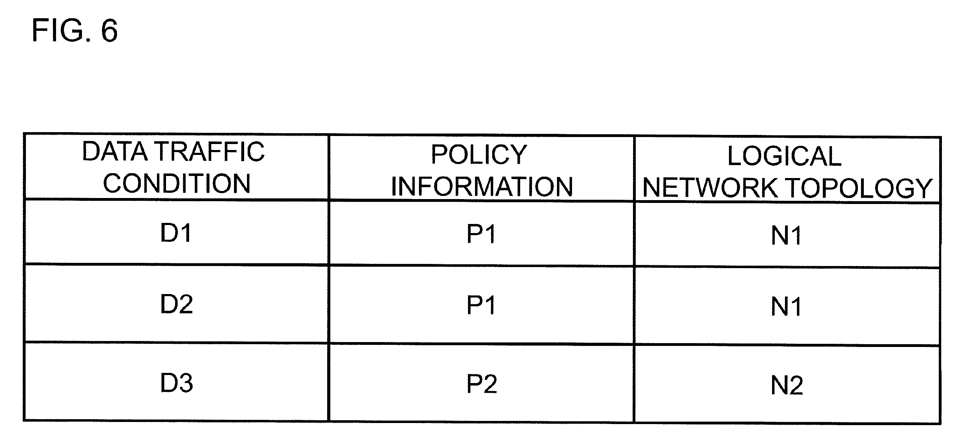

Fig. 6 illustrates a table managed by the logical network topology management unit 11. In addition to a correspondence relationship among data traffic conditions and logical network topologies, the table in Fig. 6 stores policy information used when the logical network topologies are generated. Data traffic conditions D1 and D2 in Fig. 6 are conditions for determining data traffic, such as values in a certain field of a packet header. By storing the policy information in this way, a user can easily grasp and manage which policy information has been used to generate a logical network that is applied to certain data traffic.

The packet reception unit 121 forwards an incoming packet to the path calculation unit 122 and the packet transmission unit 123.

The path calculation unit 122 is a means of acquiring a logical network topology having a data traffic condition matching the incoming packet from the logical network topology management unit 11 and calculating a forwarding path for forwarding the packet from a source to a destination. In addition, if the path calculation unit 122 is notified by the path information communication unit 124 of a path calculation result calculated by another data forwarding node, the path calculation unit 122 also uses the calculation result to calculate a packet forwarding path.

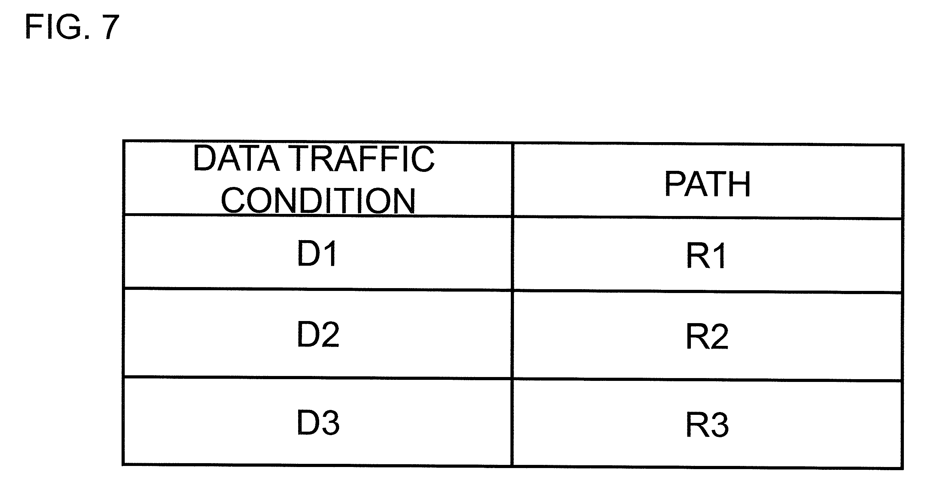

The packet transmission unit 123 is a means of referring to a table storing a path calculation result received from the path calculation unit 122 and performing packet forwarding in accordance with the calculation result obtained by the path calculation unit 122. Fig. 7 illustrates a table to which the packet transmission unit 123 refers. In Fig. 7, R1 and R2 represent IDs of calculated path information. Alternatively, R1 and R2 represent the numbers of the ports or the IDs of the interfaces that are connected to forwarding destinations defined along the paths, respectively. By referring to such table, calculation of a forwarding path for known data traffic can be omitted. Entries in the table in Fig. 7 may be deleted after a certain time elapses, as in aging processing with a MAC (Media Access Control) table.

The path information communication unit 124 notifies other data forwarding nodes of a calculation result obtained by the path calculation unit 122. In addition, when receiving a path calculation result from the path information communication unit 124 in another data forwarding node, the path information communication unit 124 forwards the calculation result to the path calculation unit 122.

Each unit (processing means) of the data forwarding node 10 illustrated in Fig. 4 can be realized by a computer program causing a computer constituting the data forwarding node 10 to use its hardware and to perform each processing described above.

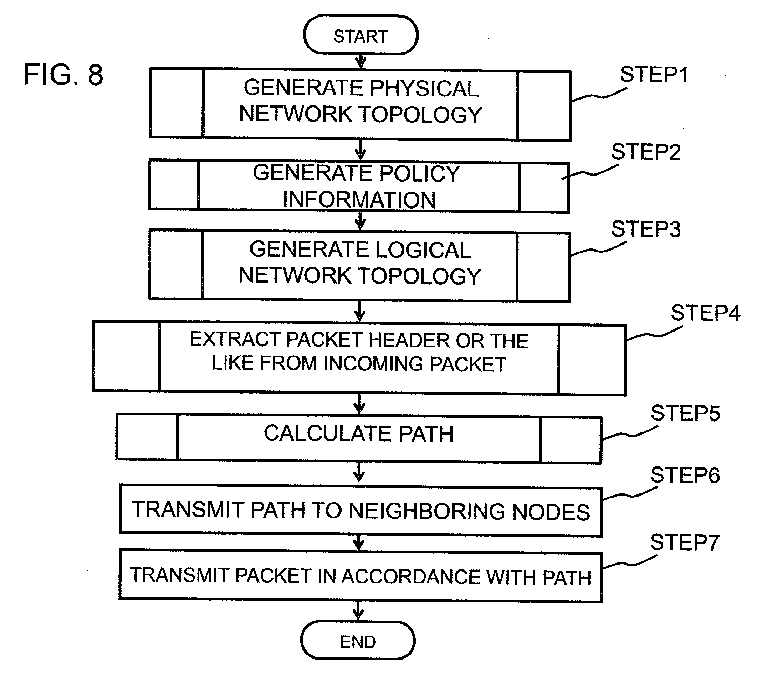

Next, an operation according to the present exemplary embodiment will be described in detail with reference to the drawings. Fig. 8 is a flowchart illustrating an operation of the data forwarding node according to the first exemplary embodiment of the present invention.

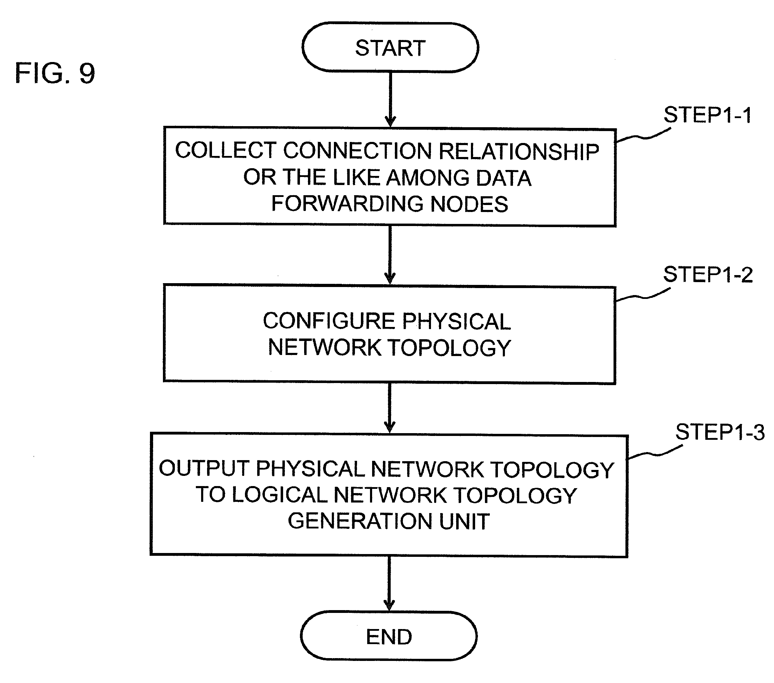

As illustrated in Fig. 8, first, when the system is started, the physical network topology collection unit 101 in a data forwarding node 10 generates a physical network topology (STEP1). Fig. 9 illustrates a specific example of physical network topology generation processing. As illustrated in Fig. 9, first, the physical network topology collection unit 101 collects information from other data forwarding nodes, such as a connection relationship among such data forwarding nodes (STEP1-1). Next, the physical network topology collection unit 101 configures a physical network topology, based on the collected information (STEP1-2). Finally, the physical network topology collection unit 101 outputs the generated physical network topology to the logical network topology generation unit 103 (STEP1-3).

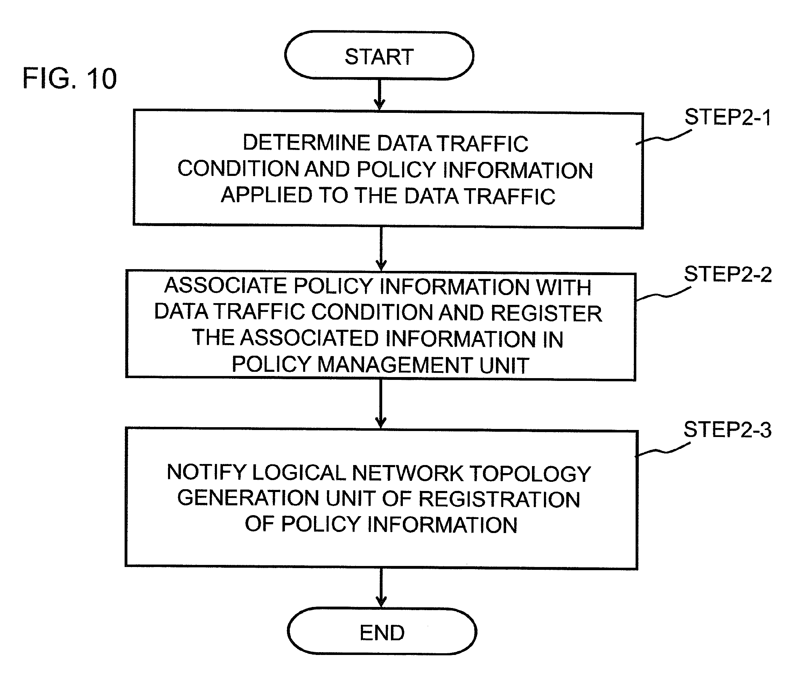

Next, policy information per data traffic is generated (STEP2). Fig. 10 illustrates a specific example of policy information generation processing. As illustrated in Fig. 10, first, a data traffic condition for determining data traffic as a control target and a policy content (policy information) applied to the data traffic are determined (STEP2-1). Next, the policy information is associated with the generated data traffic condition, and the associated information is registered in the policy management unit 102 (STEP2-2). Finally, the logical network topology generation unit 103 is notified of registration of the policy information (STEP2-3). The data traffic condition and the policy information may be created in advance by referring to traffic statistical information, various types of customer information, or the like. For example, if traffic from certain users is congested in a certain time period, mission critical services and the other services may be sorted out and different policy information may be created and applied respectively. In this way, decrease in the quality of the mission critical services can be prevented.

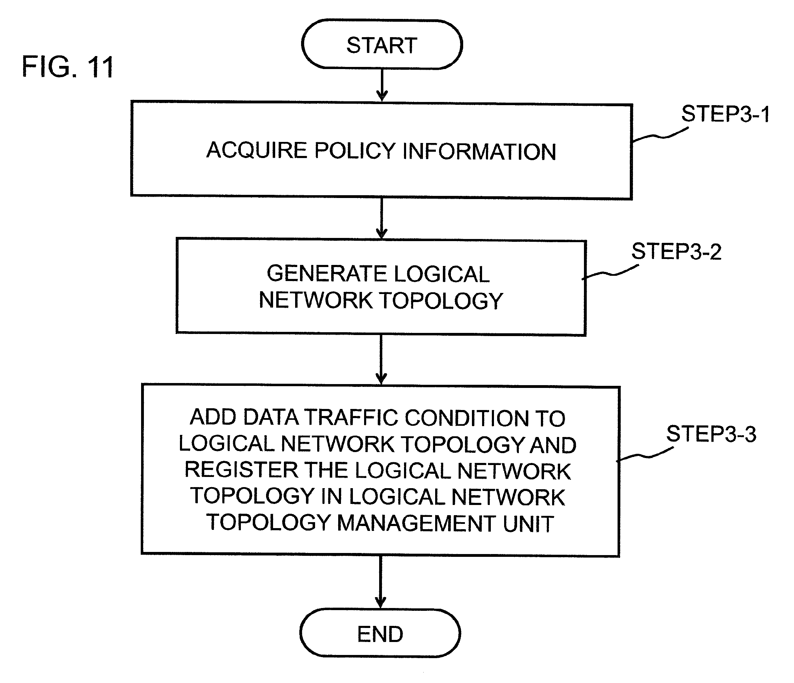

Next, the logical network topology generation unit 103 in the data forwarding node 10 applies the policy information generated in STEP2 to the physical network topology configured in STEP1, so as to generate a logical network topology (STEP3). Fig. 11 illustrates a specific example of logical network topology generation processing performed by the logical network topology generation unit 103. As illustrated in Fig. 11, first, the logical network topology generation unit 103 acquires policy information, which has not been used for generation of a logical network topology, from the policy management unit 102 (STEP3-1). Next, the logical network topology generation unit 103 applies the acquired policy information to the physical network topology outputted from the physical network topology collection unit 101, so as to generate a logical network topology (STEP3-2). Finally, the logical network topology generation unit 103 registers the generated logical network topology in the logical network topology management unit 11 (STEP3-3). The logical network topology generation unit 103 repeats this logical network topology generation processing, until each item of policy information is used for generation of a logical network topology.

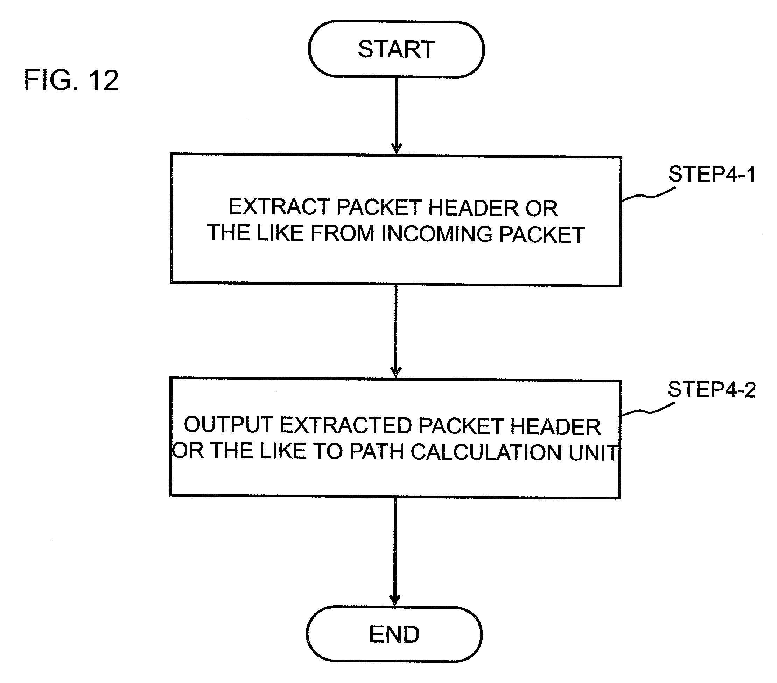

Next, when the packet reception unit 121 in the data forwarding node 10 receives a packet, the packet reception unit 121 extracts information that is matched with a data traffic condition such as a packet header of the incoming packet and outputs the information to the path calculation unit 122 (STEP4). Fig. 12 illustrates a specific example of packet reception processing performed by the packet reception unit 121. As illustrated in Fig. 12, first, the packet reception unit 121 extracts information such as a packet header or the like from the incoming packet (STEP4-1). Next, the packet reception unit 121 outputs the extracted packet header or the like to the path calculation unit 122 (STEP4-2).

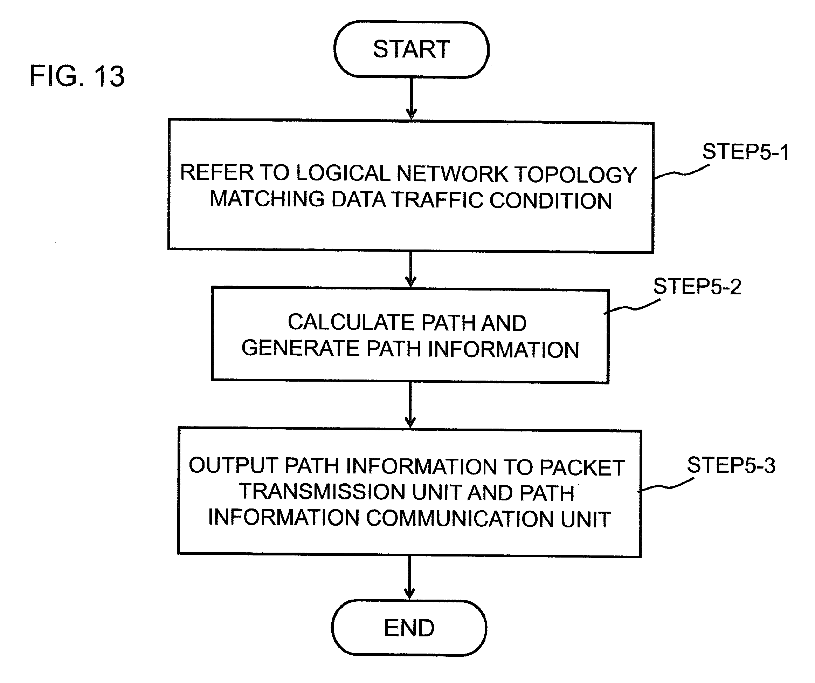

Next, the path calculation unit 122 in the data forwarding node 10 uses a logical network topology having a data traffic condition matching the packet header or the like, performs path calculation, and generates path information (STEP5). Fig. 13 illustrates a specific example of path information generation processing performed by the path calculation unit 122. As illustrated in Fig. 13, first, the path calculation unit 122 extracts a logical network topology, which has a data traffic condition matching the packet header or the like of the incoming packet received from the packet reception unit 121, from the logical network topology management unit 11 (STEP5-1). Next, the path calculation unit 122 uses the extracted logical network topology, calculates a forwarding path for the incoming packet, and generates path information (STEP5-2). Next, the path calculation unit 122 outputs the generated path information to the packet transmission unit 123 and the path information communication unit 124 (STEP5-3).

Next, the path information communication unit 124 in the data forwarding node 10 transmits the path information generated by the path calculation unit 122 to neighboring data forwarding nodes (STEP6).

In addition, the packet transmission unit 123 in the data forwarding node 10 transmit the packet received from the packet reception unit 121, in accordance with the path information generated by the path calculation unit 122 (STEP7).

If the data forwarding node 10 receives a packet after generating the above logical network, the data forwarding node 10 performs the processing after the above STEP4. In addition, if a change is caused in the physical network topology, it is only necessary that the data forwarding node 10 be configured to perform the processing starting with STEP1, as needed.

As described above, according to the present exemplary embodiment, a single physical network can be used as at least two logical networks per data traffic. In addition, the topology of a logical network can arbitrarily be changed by modifying the policy information.

In addition, according to the present exemplary embodiment, as compared with the link state method described as method 1) in "Background," the extent of the impact by a change in policy information (weight in links, etc.) can be controlled within a necessary smaller extent, and the network can be designed more easily. This is because the extent of the impact by a change in policy information (weight in links, etc.) can be limited by a data traffic condition.

While a preferred exemplary embodiment of the present invention has thus been described, the present invention is not limited thereto. Further variation, substitutions, or adjustments can be made without departing from the basic technical concept of the present invention.

For example, in the above first exemplary embodiment, policy information for giving weight between links is used. However, policy information for giving weight to data forwarding nodes or policy information using a combination of these types of weight may be used.

In addition, in the above first exemplary embodiment, a series of steps illustrated in Fig. 8 is performed when a physical network is initially configured. However, for example, STEP3 and the steps subsequent thereto in Fig. 8 may be performed when a change is caused in policy information. The disclosure of each of the above PTL is incorporated herein by reference thereto. Modifications and adjustments of the exemplary embodiments and examples are possible within the scope of the overall disclosure (including the claims and the drawings) of the present invention and based on the basic technical concept of the present invention. Various combinations and selections of various disclosed elements (including the elements in each of the claims, examples, drawings, etc.) are possible within the scope of the claims and the drawings of the present invention. That is, the present invention of course includes various variations and modifications that could be made by those skilled in the art according to the overall disclosure including the claims and the technical concept.

### REFERENCE SIGNS LIST

- 10, 10A to 10E: data forwarding node
- 11: logical network topology management unit
- 12: packet processing unit
- 20: data forwarding network
- 20A, 20B: logical network topology
- 101: physical network topology collection unit
- 102: policy management unit
- 103: logical network topology generation unit
- 121: packet reception unit
- 122: path calculation unit
- 123: packet transmission unit
- 124: path information communication unit

## Claims

1. A network, comprising a data forwarding node comprising:
a logical network topology management unit managing a correspondence relationship among at least two different logical network topologies generated based on a physical network topology and data traffic to which the logical network topologies are applied; and
a packet processing unit selecting a logical network topology corresponding to data traffic to which an incoming packet belongs, determining a packet forwarding destination, and transmitting the incoming packet.

2. The network according to claim 1;
wherein the logical network topology is generated based on policy information including weight information given to links or nodes on the physical network topology.

3. The network according to claim 1 or 2, further comprising:
a policy management unit associating the policy information with data traffic and managing the associated information.

4. The network according to claim 2 or 3;
wherein the data forwarding node further comprises a logical network topology generation unit generating the at least two logical network topologies by using the physical network topology and the policy information.

5. The network according to any one of claims 1 to 4;
wherein the packet processing unit comprises:
a path calculation unit referring to the logical network topologies and calculating a packet forwarding destination; and
a packet transmission unit performing packet forwarding in accordance with a calculation result obtained by the path calculation unit.

6. The network according to claim 5, further comprising:
a path information communication unit notifying a neighboring data forwarding node(s) of a correspondence relationship among the data traffic and a packet forwarding destination;
wherein the path calculation unit determines a packet forwarding destination of the data forwarding node including the path calculation unit, based on the logical network topologies and a correspondence relationship among the data traffic and the packet forwarding destination received from a path information communication unit in another data forwarding node.

7. A data forwarding node, comprising:
a logical network topology management unit managing a correspondence relationship among at least two different logical network topologies generated based on a physical network topology and data traffic to which the logical network topologies are applied; and
a packet processing unit selecting a logical network topology corresponding to data traffic to which an incoming packet belongs, determining a packet forwarding destination, and transmitting the incoming packet.

8. The data forwarding node according to claim 7;
wherein the logical network topology is generated based on policy information including weight information given to links or nodes on the physical network topology.

9. A communication method, comprising steps of:
causing a data forwarding node, which comprises a logical network topology management unit that manages a correspondence relationship among at least two different logical network topologies generated based on a physical network topology and data traffic to which the logical network topologies are applied, to select, when the data forwarding node receives a packet, a logical network topology corresponding to data traffic to which the packet belongs, from among the at least two different logical network topologies; and
causing the data forwarding node to use the selected logical network topology, determine a packet forwarding destination, and transmit the incoming packet.

10. A program, causing a computer arranged in a physical network to perform processes of:
causing a data forwarding node, which comprises a logical network topology management unit that manages a correspondence relationship among at least two different logical network topologies generated based on the physical network topology and data traffic to which the logical network topologies are applied, to select, when the data forwarding node receives a packet, a logical network topology corresponding to data traffic to which the packet belongs, from among the at least two different logical network topologies; and
causing the data forwarding node to use the selected logical network topology, determine a packet forwarding destination, and transmit the incoming packet.
